# EUROPÄISCHE PATENTSCHRIFT

(11) **EP 2 897 254 B1**
(45) Veröffentlichungstag und Bekanntmachung des Hinweises auf die Patenterteilung: **24.10.2018**
(21) Anmeldenummer: 15000062.8
(22) Anmeldetag: 13.01.2015
(51) Int. Cl.: H02K 1/14, H02K 15/02

(54) **Ringförmiges Lamellenpaket aus Einzelzahnpaketen sowie Verfahren zur Herstellung eines Lamellenpaketes**
Toothed annular stack of laminations as well as manufacturing method of such a lamiantion stack
Paquet de tôles dentées annulaire ainsi que procédé de fabrication d'un tel paquet de tôles

(30) Priorität: 17.01.2014 DE 102014000690
(43) Veröffentlichungstag der Anmeldung: 22.07.2015
(73) Patentinhaber: Kienle + Spiess GmbH, 74343 Sachsenheim (DE)
(72) Erfinder: Burkhardt, Georg, 71665 Vaihingen/Enz (DE)
(74) Vertreter: Kohl, Karl-Heinz

(56) Entgegenhaltungen:
- WO-A2-2008/021401
- DE-A1-102004 043 424
- US-A1- 2002 145 359
- US-A1- 2007 024 149

## Beschreibung

Die Erfindung betrifft ein ringförmiges Lamellenpaket nach dem Oberbegriff des Anspruches 1 sowie ein Verfahren zur Herstellung eines solchen Lamellenpaketes nach dem Oberbegriff des Anspruches 7.

Ein solches ringförmiges Lamellenpaket ist aus DE 10 2004 043424 A1 bekannt.

Es ist bekannt, aus Einzelzahnlamellen gebildete Einzelzahnpakete zu einem ringförmigen Lamellenpaket zusammenzusetzen. Um die Einzelzahnpakete zum ringförmigen Lamellenpaket zusammensetzen zu können, haben die Polschuhe der Einzelzahnpakete definierte Anlageflächen, vorzugsweise an ihrer einen Stirnseite einen Vorsprung und an ihrer gegenüberliegenden Stirnseite eine hierzu komplementäre Vertiefung. Der Vorsprung ist in Ansicht teilkreisförmig ausgebildet und erstreckt sich über mehr als 180°. Beim Zusammenfügen werden die Einzelzahnpakete mit ihrem Vorsprung an einem Ende des Einzelzahnpaketes in die entsprechende Vertiefung des benachbarten Einzelzahnpaketes eingesetzt und in Längsrichtung des Einzelzahnpaketes so lange verschoben, bis die zusammengefügten Einzelzahnpakete auf gleicher Höhe liegen. Die zusammengesetzten Einzelzahnpakete werden beim Kunden wieder auseinander genommen, um sie zu ummanteln und zu bewickeln. Anschließend werden die Einzelzahnpakete vom Kunden wieder zum ringförmigen Lamellenpaket zusammengefügt. Sowohl beim Füge- als auch beim Trennvorgang kommt es häufig zu unerwünschten Verformungen im Bereich der Vorsprünge und Vertiefungen, wodurch die elektrischen Eigenschaften des Lamellenpaketes sowie auch die geometrischen Bedingungen verschlechtert werden. Auch kann es vorkommen, dass beim Zusammenschieben der Einzelzahnpakete Späne in die Vertiefungen gelangen. Die Späne rühren vom Stanzgrat her, der sich an den Einzelzahnlamellen beim Ausstanzen aus einem Blechband bildet. Aufgrund der Späne kann es zu einem Kurzschluss beim Einsatz des Lamellenpaketes in einem elektrischen Betriebsmittel kommen.

Der Erfindung liegt die Aufgabe zugrunde, das gattungsgemäße ringförmige Lamellenpaket sowie das gattungsgemäße Verfahren so auszubilden, dass die Einzelzahnpakete einfach zu einem ringförmigen Lamellenpaket zusammengefügt und auch aus ihm herausgelöst werden können, ohne dass Beeinträchtigungen bezüglich der elektrischen und geometrischen Bedingungen und Kurzschlüsse beim späteren Einsatz des Lamellenpaketes zu befürchten sind.

Diese Aufgabe wird beim gattungsgemäßen ringförmigen Lamellenpaket erfindungsgemäß mit den kennzeichnenden Merkmalen des Anspruches 1 und beim gattungsgemäßen Verfahren erfindungsgemäß mit den kennzeichnenden Merkmalen des Anspruches 7 gelöst.

Das ringförmige Lamellenpaket besteht aus einzelnen Einzelzahnpaketen, wobei benachbarte Einzelzahnpakete über mindestens eine Klebeverbindung miteinander verbunden sind. Die Klebemittelverbindung ist so ausgebildet, dass sie durch verhältnismäßig geringe Kraftanwendung gelöst werden kann. Es ist möglich, diese Klebemittelverbindung durch entsprechende manuelle Kraft zu lösen, so dass die Einzelzahnpakete vom Anwender für die Ummantelung und Bewicklung aus dem ringförmigen Lamellenpaket gelöst werden können. Die Klebemittelverbindung ist dabei so gestaltet, dass die Einzelzahnpakete während des Transportes sicher zusammengehalten werden.

Bei einer einfachen Ausführung liegen die Einzelzahnpakete mit den Stirnseiten ihrer Polschuhe flächig aneinander und sind mittels der Klebemittelverbindung zusammengehalten.

Vorteilhaft ist es allerdings, wenn die Polschuhe an ihrer einen Stirnseite wenigstens einen Vorsprung und an ihrer anderen Stirnseite wenigstens eine Vertiefung aufweisen, die jeweils vorzugsweise hinterschnittfrei ausgebildet sind. Die Vorsprünge und Vertiefungen erleichtern das positionsgenaue Aneinandersetzen der einzelnen Einzelzahnpakete nach deren Ummanteln und Bewickeln zum ringförmigen Lamellenpaket.

Aufgrund der bevorzugten hinterschnittfreien Ausbildung können die aus den Einzelzahnlamellen gebildeten Einzelzahnpakete sehr einfach dadurch zusammengefügt werden, dass das eine Einzelzahnpaket mit seinem Vorsprung seitlich in die Vertiefung des benachbarten Einzellamellenpaketes gesteckt wird. Ein Längsverschieben benachbarter Einzelzahnpakete ist damit nicht erforderlich. Entsprechend einfach können die Einzelzahnpakete wieder voneinander gelöst werden. Aufgrund der hinterschnittfreien Ausbildung des Vorsprunges und der Vertiefung kommt es beim Trenn- und beim Fügevorgang nicht zu unerwünschten plastischen Verformungen. Auch die Gefahr, dass Stanzgrate beim Trenn- oder Fügevorgang abbrechen und in die Vertiefungen gelangen, besteht darum nicht mehr. Aufgrund der erfindungsgemäßen Gestaltung der Einzelzahnlamellen können Einzelzahnpakete und damit ringförmige Lamellenpakete hergestellt werden, die sich durch hervorragende elektrische und/oder geometrische Eigenschaften auszeichnen, da die beim Stanzen benachbarten Einzelzahnlamellen auch im montierten ringförmigen Lamellenpaket benachbart sind.

Der Vorsprung und die Vertiefung sind bevorzugt komplementär zueinander ausgebildet, so dass ein einfacher Fügevorgang und eine exakte Ausrichtung der Einzelzahnpakete gegeneinander sichergestellt ist.

Zu einer genauen Positionierung der Einzelzahnpakete trägt bei, wenn die Breite des Vorsprunges im Bereich der Stirnseite des Polschuhes kleiner ist als die Breite dieser Stirnseite. Dann liegen benachbarte Einzelzahnpakete nicht nur mit den Vorsprüngen und Vertiefungen aneinander, sondern auch mit den Stirnseiten der Polschuhe im Bereich außerhalb der Vorsprünge und Vertiefungen.

Bei einer vorteilhaften Ausführungsform ist der Vorsprung der Einzelzahnlamelle so ausgebildet, dass seine Breite, ausgehend von der Stirnseite des Polschuhes, in Richtung auf sein freies Ende abnimmt.

Eine einfache Fertigung der Einzelzahnlamelle ergibt sich hierbei, wenn sich der Vorsprung von der Stirnseite des Polschuhes aus in Richtung auf sein freies Ende stetig verjüngt. So gestaltete Vorsprünge lassen sich einfach und kostengünstig fertigen. Aus solchen Einzelzahnlamellen gebildete Einzelzahnpakete können dadurch auch einfach voneinander getrennt und gefügt werden.

Bei einer vorteilhaften Ausbildung weist der Vorsprung dreieckförmigen Umriss auf.

Der Vorsprung kann nach einer weiteren vorteilhaften Ausbildung auch etwa halbkreisförmigen Umriss aufweisen.

Eine zuverlässige Verbindung benachbarter Einzelzahnpakete ergibt sich, wenn sich das Klebemittel im Bereich des Fügespaltes zwischen benachbarten Einzelzahnpaketen befindet. Das Klebemittel kann hierbei zwischen der Außenseite des Vorsprunges und der Wandung der Vertiefung vorgesehen sein. Es besteht auch die Möglichkeit, dass das Klebemittel allein oder zusätzlich hierzu auch im Bereich der aneinanderliegenden Stirnseiten außerhalb des Vorsprungs bzw. der Vertiefung vorhanden ist.

Eine ausreichend feste und dennoch leicht lösbare Klebemittelverbindung ergibt sich, wenn das Klebemittel in Form von Klebepunkten aufgebracht ist. Es müssen nur so viele Klebepunkte aufgetragen werden, dass sich die gewünschte feste Verbindung zwischen den Einzelzahnpaketen ergibt. Durch eine solche Ausbildung wird auch Klebemittel eingespart.

Das Klebemittel wird im Bereich der Fügespalte zwischen benachbarten Einzelzahnpaketen aufgebracht. Hierbei wird das Klebemittel vorteilhaft im Bereich der Fügespalte auf wenigstens eine Stirnseite des Lamellenpaketes aufgebracht. Das Klebemittel dringt dann infolge Kapillarwirkung in den Fügespalt ein. Wird das Klebemittel im Bereich der Fügespalte auf beide Stirnseiten des Lamellenpaketes aufgetragen, ergibt sich eine noch bessere Klebeverbindung zwischen benachbarten Einzelzahnpaketen.

Das Klebemittel kann auch längs des Einzelzahnpaketes an mit Abstand voneinander liegenden Stellen auf den Fügespalt zwischen benachbarten Einzelzahnpaketen aufgebracht werden. Infolge Kapillarwirkung dringt das Klebemittel jeweils in den Fügespalt ein.

Von Vorteil ist es weiter, wenn das Klebemittel nicht vollflächig aufgetragen wird, sondern in Tropfenform. Dies reicht für eine zuverlässige Verbindung zwischen den Einzelzahnpaketen aus. Dabei können sie von Hand bei entsprechender Kraftaufwendung wieder voneinander gelöst werden.

Vorteilhaft werden in einem Stanzwerkzeug zunächst die Trennstellen zwischen benachbarten Einzelzahnlamellen hergestellt. In einem weiteren Schritt werden vorzugsweise mit dem gleichen Stanzwerkzeug die Einzelzahnlamellen ausgestanzt. Sie sind ringförmig angeordnet.

Zur Bildung des Lamellenpaketes werden die ringförmig hintereinander angeordneten Einzelzahnlamellen aufeinander gesetzt und in geeigneter Weise miteinander verbunden. So können die aufeinanderliegenden Einzelzahnlamellen miteinander verschweißt und/oder miteinander verklebt und/oder form- und/oder kraftschlüssig miteinander verbunden werden.

Vorteilhaft wird das Klebemittel auch auf Stirnseiten von Einzelzahnlamellen innerhalb des Lamellenpaketes aufgebracht.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in perspektivischer Darstellung ein ringförmiges Lamellenpaket, das aus erfindungsgemäßen Einzelzahnlamellen zusammengesetzt ist,
- Fig. 2: das Lamellenpaket in Seitenansicht,
- Fig. 3: das Lamellenpaket in Draufsicht,
- Fig. 4: die Einzelheit A in Fig. 3 in vergrößerter Darstellung,
- Fig. 5 und 6: in Darstellungen entsprechend den Fig. 3 und 4 eine weitere Ausführungsform eines aus erfindungsgemäßen Einzelzahnlamellen zusammengesetzten Lamellenpaketes,
- Fig. 7 und Fig. 8: in Darstellungen entsprechend den Fig. 3 und 4 eine weitere Ausführungsform eines aus erfindungsgemäßen Einzelzahnlamellen zusammengesetzten Lamellenpaketes.

Aus den im Folgenden beschriebenen Lamellen in Form von Einzelzähnen werden ringförmige Lamellenpakete gebildet, die bei elektrischen Maschinen eingesetzt werden. Solche Lamellenpakete werden beispielsweise bei Rotoren und/oder Statoren von Elektromotoren eingesetzt.

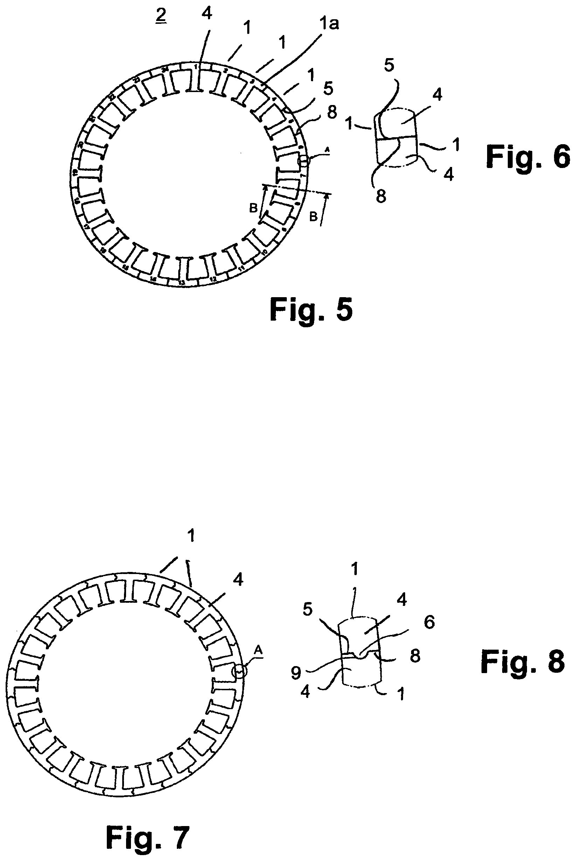

Die im Folgenden beschriebenen Lamellen sind Einzelzähne, die einen Ring bilden. Die gestanzten Ringe werden anschließend zu einem ringförmigen Lamellenpaket 2 zusammengesetzt. Es besteht aus aneinander liegenden Einzelzahnpaketen 1. Sie werden, wie in Fig. 5 beispielhaft angegeben ist, durchnummeriert. Im dargestellten Ausführungsbeispiel gemäß Fig. 5 besteht das ringförmige Lamellenpaket 2 aus 24 Einzelzahnpaketen 1. Die Einzelzahnpakete 1 sind für den Transport zum Kunden zum ringförmigen Lamellenpaket 2 zusammengesetzt. Der Kunde trennt das ringförmige Lamellenpaket 2 in die Einzelzahnpakete 1 auf, um diese zu ummanteln und zu bewickeln. Anschließend werden die Einzelzahnpakete 1 in der vorigen Reihenfolge wieder zum Lamellenpaket 2 zusammengefügt. Die Einzelzahnpakete 1 sind so ausgebildet, dass sie problemlos für eine weitere Behandlung voneinander getrennt und wieder einfach zum ringförmigen Lamellenpaket 2 zusammengefügt werden können. Die Nummerierung der Einzelzahnpakete 1 soll veranschaulichen, dass die beim Stanzen benachbarten Lamellen nach dem Trennen und Zusammenfügen der Einzelzahnpakete 1 auch im Lamellenpaket 2 benachbart sind. Dadurch ergeben sich optimale geometrische und elektrische Eigenschaften des Lamellenpaketes 2.

Die Einzelzahnpakete 1 werden aus Einzelzahnlamellen 1a gebildet. Vorteilhaft wird zur Herstellung der Einzelzahnlamellen 1a ein Blechband verwendet, aus dem, wie in Fig. 5 beispielhaft dargestellt, 24 Einzellamellen 1a herausgeschnitten werden. Sie können hierbei durch Stanzen, aber auch durch andere Schneidverfahren, wie beispielsweise Laserschneiden, aus dem Blechband herausgeschnitten werden.

Die Einzelzahnlamelle 1a hat einen Polschaft 3 und einen Polschuh 4. Der Polschaft 3 und der Polschuh 4 können einstückig miteinander ausgebildet sein. Es ist aber auch möglich, den Polschaft 3 und den Polschuh 4 getrennt voneinander herzustellen und anschließend miteinander zu verbinden.

Der Polschuh 4 ist an seiner einen Stirnseite 5 mit einem Vorsprung 6 versehen, der etwa dreieckförmigen Umriss hat. Die Spitze 7 des Vorsprunges 6 ist bevorzugt abgerundet. Der Vorsprung 6 steht mittig über die Stirnseite 5 des Polschuhes 4 vor.

An der gegenüberliegenden Stirnseite 8 hat der Polschuh 4 eine zum Vorsprung 6 komplementäre Vertiefung 9.

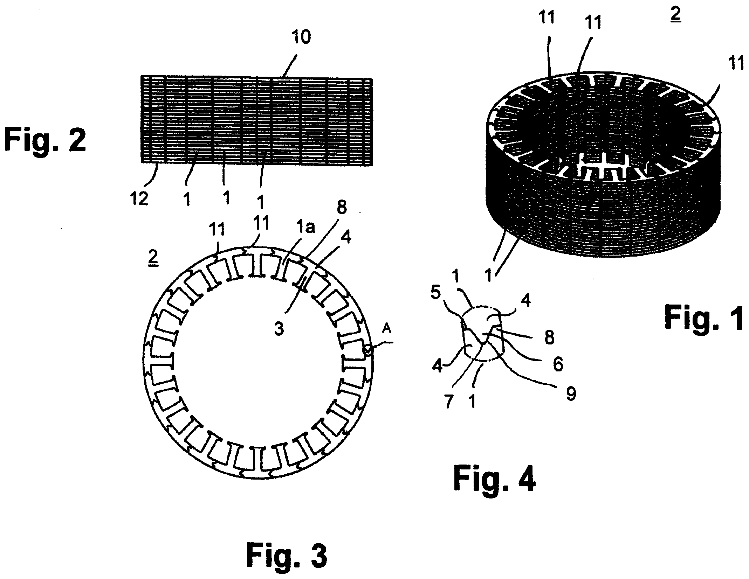

In Höhe der Stirnseite 5 ist die radiale Breite des Vorsprunges 6 kleiner als die Breite der Stirnseite 5. Auch die Vertiefung 9 ist im Bereich der Stirnseite 8 schmaler als diese Stirnseite. Dadurch liegen benachbarte Einzelzahnpakete 1 nicht nur mit ihren Vorsprüngen 6 und Vertiefungen 9 flächig aneinander, sondern auch mit einem Teil ihrer Stirnseiten 5, 8 (Fig. 3 und 4). Dadurch wird erreicht, dass die Einzelzahnpakete 1 innerhalb des ringförmigen Lamellenpaketes 2 einwandfrei gegeneinander ausgerichtet sind.

Im Stanzwerkzeug werden beim Ausführungsbeispiel 24 Trennstellen vorgestanzt. Die zum Verbinden der Einzelzahnlamellen 1a zum Einzelzahnpaket 1 vorgesehenen Verbindungselemente werden vor oder nach dem Trennvorgang auf- bzw. eingebracht. Anschließend werden optional die Klebestellen zur Verbindung der Einzelzahnpakete 1 zum ringförmigen Lamellenpaket 2 aufgebracht. Beim Ausstanzen innerhalb desselben Stanzwerkzeuges entstehen die beispielhaften 24 Einzelzahnlamellen 1a in kreisförmiger Anordnung, was einer Ebene des ringförmigen Lamellenpaketes 2 entspricht und die in der Matrize der Ausstanzfolge zum Lamellenpaket 2 verbunden werden. Aus den Einzelzahnlamellen-Ringen wird das Lamellenpaket 2 aufgebaut.

Die aufeinander sitzenden Einzelzahnlamellen 1a können auf jede geeignete Weise untereinander verbunden sein, beispielsweise durch eine Klebeverbindung, mechanisch durch ineinandergreifende, in den Einzelzahnlamellen 1a vorgesehene Erhöhungen und Vertiefungen, durch die Einzelzahnlamellen 1a durchsetzende Stifte und dergleichen. Innerhalb des Einzelzahnpaketes 1 bilden die Vorsprünge 6 einen über die Höhe des Einzelzahnpaketes 1 verlaufenden Steg, mit dem das Einzelzahnpaket 1 in die durch die Vertiefungen 9 gebildete Nut des benachbarten Einzelzahnpaketes 1 eingreift. Da die Vorsprünge 6 und die Vertiefungen 9 hinterschnittfrei sind, lassen sich die Einzelzahnpakete 1 vor dem Ummantelungs- und Wicklungsvorgang problemlos trennen und danach durch Zusammenfügen in Umfangsrichtung des herzustellenden ringförmigen Lamellenpaketes 2 wieder problemlos zusammenfügen. Durch die ebenen Stirnseiten 5, 8, mit denen die benachbarten Einzelzahnpakete 1 aneinander liegen, lässt sich eine einwandfreie Ausrichtung der Einzelzahnpakete 1 sicherstellen.

Damit das aus den Einzelzahnpaketen gebildete ringförmige Lamellenpaket 2 nicht auseinanderfällt, sind benachbarte Einzelzahnpakete 1 durch wenigstens eine Klebestelle miteinander verbunden. Das Klebemittel wird z.B. auf wenigstens eine Stirnseite 10 der jeweils zusammengefügten Einzelzahnpakete 1 im Bereich des Fügespaltes 11 zwischen benachbarten Einzelzahnpaketen 1 aufgebracht. Infolge Kapillarwirkung dringt das Klebemittel in den Fügespalt 11 ein. Das Klebemittel kann auch von der gegenüberliegenden Stirnseite 12 der zusammengefügten Einzelzahnpakete 1 aus im Bereich des Fügespaltes 11 aufgebracht werden. Je nach Dicke des Lamellenpaketes 2 kann das Klebemittel auch an beiden Stirnseiten 10, 12 in den Fügespalt zwischen benachbarten Einzelzahnpaketen 1 aufgetragen werden. Es ist auch möglich, das Klebemittel innerhalb des Einzelzahnpaketes 1 auf die Stirnseiten einzelner oder aller Einzelzahnlamellen 1a aufzubringen.

Ebenso ist es möglich, das Klebemittel längs des Fügespaltes 11 über die Länge der Einzelzahnpakete aufzutragen. Eine solche Vorgehensweise ist aber nur außerhalb des Stanzprozesses möglich.

Durch das Klebemittel werden die Einzelzahnpakete 1 innerhalb des Lamellenpaketes 2 ausreichend fest miteinander verbunden, so dass das Lamellenpaket 2 beim Transport nicht in die Einzelzahnpakete 1 auseinanderfällt. Andererseits ist die Klebekraft nur so groß, dass das Lamellenpaket 2 durch entsprechende Kraftbeaufschlagung leicht in die einzelnen Einzelzahnpakete 1 aufgetrennt werden kann.

Weiter kann das Klebemittel auf den durch die Vorsprünge 6 gebildeten Steg abschnittsweise aufgebracht werden, vorzugsweise als Klebepunkt. Ebenso kann das Klebemittel in den durch die Vertiefungen 9 gebildete Nut des Einzelzahnpaketes 1 zumindest bereichsweise, vorzugsweise als Klebepunkt, aufgebracht werden. Als Klebemittel kommt beispielsweise ein Cyanacrylat in Betracht.

Da die Vorsprünge 6 und die Vertiefungen 9 keine Hinterschnitte aufweisen, lassen sich die Einzelzahnpakete 1 in Umfangsrichtung des Lamellenpaketes 2 voneinander trennen und zusammenfügen. Hierbei kommt es zu keinerlei Verformungen der Einzelzahnpakete, die zur Verschlechterung der elektrischen und/oder geometrischen Bedingungen führen würden.

Werden die Einzelzahnlamellen 1a durch ein Stanzverfahren aus dem Blechband geschnitten, dann haben die Einzelzahnlamellen 1a einen Stanzgrat. Er führt zu keinen Problemen beim Zusammensetzen der Einzelzahnpakete 1, weil infolge der fehlenden Hinterschnitte die Einzelzahnpakete einfach voneinander getrennt und wieder zusammengesetzt werden können.

Die Fig. 5 und 6 zeigen eine Ausführungsform, bei der die Stirnseiten 5, 8 der Polschuhe 4 der Einzelzahnlamellen 1a eben sind. Im Unterschied zur vorigen Ausführungsform liegen daher die aus den Einzelzahnlamellen 1a gebildeten Einzelzahnpakete 1 mit ihren Stirnseiten 5, 8 flächig aneinander. Die Stirnseiten 5, 8 liegen in Axialebenen des aus den Einzelzahnpaketen 1 gebildeten ringförmigen Lamellenpaketes 2. Das Klebemittel wird in der beschriebenen Weise aufgebracht, vorzugsweise als Klebepunkt. Das Klebemittel wird über die Höhe der Einzelzahnpakete 1 so verteilt aufgebracht, dass die aneinanderliegenden Einzelzahnpakete 1 sicher zusammengehalten werden. Der partielle Klebemittelauftrag sorgt wie auch bei der vorigen Ausführungsform dafür, dass die Einzelzahnpakete 1 problemlos voneinander getrennt werden können, damit diese ummantelt und bewickelt werden können.

Da die benachbarten Einzelzahnpakete nicht formschlüssig miteinander verbunden sind, ist es von Vorteil, wenn das Klebemittel unmittelbar auf die jeweilige Stirnseite 5, 8 der Einzelzahnpakete 1 aufgebracht wird. Grundsätzlich ist es aber auch möglich, das Klebemittel auf die aneinanderliegenden Einzelzahnpakte 1 an ihren Stirnseiten 10, 12 in Höhe des Fügespaltes 11 aufzubringen, was aber nur außerhalb des Stanzprozesses durchführbar wäre. Infolge Kapillarwirkung dringt das Klebemittel in den Fügespalt 11 ein und sorgt dadurch für eine zuverlässig feste Verbindung zwischen aneinanderliegenden Einzelzahnpaketen 1.

Die Ausführungsform gemäß den Figuren 7 und 8 entspricht im Wesentlichen der ersten Ausführungsform gemäß den Fig. 1 bis 4. An der einen Stirnseite 5 des Polschuhes 4 ist der Vorsprung 6 vorgesehen, während die andere Stirnseite 8 dieses Polschuhes die Vertiefung 9 aufweist. Der Vorsprung 6 ist etwa halbkreisförmig ausgebildet und schmaler als der Vorsprung 6 der Ausführungsform gemäß den Fig. 1 bis 4. Dadurch liegen benachbarte Einzelzahnpakete 1 mit einem größeren Bereich ihrer Stirnseiten 5, 8 aneinander. Der Vorsprung 6 und die Vertiefung 9 sind komplementär zueinander ausgebildet.

Wie bei den vorigen Ausführungsbeispielen werden die kreisförmig angeordneten Einzelzahnlamellen 1a zum ringförmigen Lamellenpaket 2 zusammengesetzt. Die durch die Vorsprünge 6 gebildeten Stege der Einzelzahnpakete 1 greifen in die durch die Vertiefungen 9 gebildeten Nuten des jeweils benachbarten Einzelzahnpaketes 1 ein. Da die Vorsprünge 6 und die Vertiefungen 9 keine Hinterschnitte aufweisen, lassen sich die Einzelzahnpakete 1 vor dem Ummanteln und Aufwickeln problemlos trennen und wieder zusammenfügen. Der Klebemittelauftrag ist wiederum so vorgenommen, dass das Lamellenpaket 2 durch entsprechende Kraftbeaufschlagung in seine einzelnen Einzelzahnpakete 1 aufgeteilt werden kann. Auch dieser Trennvorgang ist problemlos möglich, weil die hinterschnittfreie Gestaltung der Vorsprünge und Vertiefungen es erlaubt, die einzelnen Einzelzahnpakete in Umfangsrichtung des Lamellenpaketes 2 voneinander zu lösen.

Wenn die Einzelzahnlamellen 1a etwa symmetrisch zu ihrer Längsmittelebene bzw. die im Ring hintereinander liegenden Einzelzahnlamellen rotationssymmetrisch ausgebildet sind, besteht die Möglichkeit, vor dem Auflegen der ausgestanzten Einzelzahnlamellen 1a auf den bereits gebildeten Stapel diesen mittels einer Drehstation um seine Achse um den Winkel des Einzelzahnpaketes 1 zu drehen. Dadurch ergeben sich bessere Toleranzen hinsichtlich Parallelität, Rundlauf, Planlauf und dergleichen des Lamellenstapels 2.

## Patentansprüche

1. Ringförmiges Lamellenpaket, das aus aneinandergesetzten Einzelzahnpaketen (1) besteht, die jeweils wenigstens einen Polschaft (3) und wenigstens einen Polschuh (4) aufweisen, wobei benachbarte Einzelzahnpakete (1) mit den Stirnseiten (5, 8) ihrer Polschuhe (4) aneinanderliegen und über mindestens eine Klebemittelverbindung miteinander verbunden sind,
**dadurch gekennzeichnet, dass** die Klebemittelverbindung so ausgebildet ist, dass sie einerseits unter Anwendung manueller Kraft lösbar ist, um die Einzelzahnpakete (1) aus dem ringförmigen Lamellenpaket (2) zu lösen, dass sie andererseits die Einzelzahnpakete (1) während des Transports zusammenhält.

2. Lamellenpaket nach Anspruch 1,
**dadurch gekennzeichnet, dass** die Polschuhe (4) an ihrer einen Stirnseite (5) wenigstens einen Vorsprung (6) und an ihrer anderen Stirnseite (8) wenigstens eine Vertiefung (9) aufweisen, und dass der Vorsprung (6) und die Vertiefung (9) vorzugsweise hinterschnittfrei ausgebildet sind.

3. Lamellenpaket nach Anspruch 2,
**dadurch gekennzeichnet, dass** der Vorsprung (6) und die Vertiefung (9) komplementär zueinander ausgebildet sind.

4. Lamellenpaket nach Anspruch 2 oder 3,
**dadurch gekennzeichnet, dass** die Breite des Vorsprunges (6) im Bereich der Stirnseite (5) des Polschuhes (4) kleiner ist als die Breite dieser Stirnseite.

5. Lamellenpaket nach einem der Ansprüche 1 bis 4,
**dadurch gekennzeichnet, dass** sich das Klebemittel im Bereich des Fügespaltes (11) zwischen benachbarten Einzelzahnpaketen (1) befindet.

6. Lamellenpaket nach einem der Ansprüche 1 bis 5,
**dadurch gekennzeichnet, dass** das Klebemittel in Form von Klebepunkten aufgetragen ist.

7. Verfahren zur Herstellung eines Lamellenpaketes nach
einem der Ansprüche 1 bis 6, bei dem Einzelzahnpakete (1) mit den Stirnseiten (5, 8) der Polschuhe (4) aneinanderliegend miteinander verbunden sind, wobei zwischen die Einzelzahnpakete (1) wenigstens partiell ein Klebemittel eingebracht wird
**dadurch gekennzeichnet, dass** das Klebemittel im Bereich der Fügespalte (11) auf wenigstens eine Stirnseite (10, 12) des Lamellenpaketes (2) aufgebracht wird, und dass das Klebemittel durch Kapillarwirkung in den Fügespalt (11) eindringt.

8. Verfahren nach Anspruch 7,
**dadurch gekennzeichnet, dass** das Klebemittel in Tropfenform aufgebracht wird.

9. Verfahren nach Anspruch 7 oder 8,
**dadurch gekennzeichnet, dass** in einem Stanzwerkzeug zunächst die Trennstellen zwischen benachbarten Einzellamellen (1a) hergestellt und in einem weiteren Schritt die Einzelzahnlamellen (1a) ausgestanzt werden.

10. Verfahren nach Anspruch 9,
**dadurch gekennzeichnet, dass** die in kreisförmiger Anordnung vorliegenden Einzelzahnlamellen (1a) eine Ebene des Lamellenpaketes (2) bilden, wobei die ringförmig angeordneten Einzelzahnlamellen (1a) zum Lamellenpaket (2) gestapelt werden.

11. Verfahren nach einem der Ansprüche 7 bis 10,
**dadurch gekennzeichnet, dass** das Klebemittel auf Stirnseiten von Einzelzahnlamellen (1a) innerhalb des Lamellenpaketes (2) aufgebracht wird.

## Claims

1. An annular lamination stack consisting of assembled toothed stacks of laminations (1) which each have at least one pole body (3) and at least one pole shoe (4), adjacent toothed stacks of laminations (1) bearing against one another by the end faces (5, 8) of their pole shoes (4) and being connected to one another via at least one adhesive connection, **characterised in that** the adhesive connection is such that it can be undone by application of manual force in order to detach the toothed stacks of laminations (1) from the annular lamination stack (2) and also such that it holds the toothed stacks of laminations (1) together during transport.

2. The lamination stack according to Claim 1, **characterised in that** the pole shoes (4) have at least one protrusion (6) on one end face (5) and at least one depression (9) on the other end face (8), and the protrusion (6) and the depression (9) are preferably formed without undercuts.

3. The lamination stack according to Claim 2, **characterised in that** the protrusion (6) and the depression (9) complement each other.

4. The lamination stack according to Claim 2 or 3, **characterised in that** the width of the protrusion (6) in the region of the end face (5) of the pole shoe (4) is smaller than the width of said end face.

5. The lamination stack according to any one of Claims 1 to 4, **characterised in that** the adhesive is situated in the region of the join gap (11) between adjacent toothed stacks of laminations (1).

6. The lamination stack according to any one of Claims 1 to 5, **characterised in that** the adhesive is applied in the form of adhesive points.

7. A method for producing a lamination stack according to any one of Claims 1 to 6, in which toothed stacks of laminations (1) are connected together so as to bear against one another by the end faces (5, 8) of the pole shoes (4), an adhesive being introduced at least partially between the toothed stacks of laminations (1), **characterised in that** the adhesive is applied to at least one end face (10, 12) of the lamination stack (2) in the region of the join gap (11), and the adhesive penetrates into the join gap (11) by capillary action.

8. The method according to Claim 7, **characterised in that** the adhesive is applied in droplet form.

9. The method according to Claim 7 or 8, **characterised in that** in a punching tool, the separation points between adjacent laminations (la) are produced first, and the toothed laminations (la) are punched out in a further step.

10. The method according to Claim 9, **characterised in that** the toothed laminations (la) present in a circular arrangement form a plane of the lamination stack (2), wherein the toothed laminations (la) arranged in a ring are stacked to form the lamination stack (2).

11. The method according to any one of Claims 7 to 10, **characterised in that** the adhesive is applied to end faces of toothed laminations (la) inside the lamination stack (2).

## Revendications

1. Paquet de tôles dentées annulaire, qui consiste dans des paquets de dents unitaires (1) mis bout à bout, qui comportent chacun au moins une tige polaire (3) et au moins une pièce polaire (4), par les faces frontales (5, 8) de leurs pièces polaires (4), des paquets de dents unitaires (1) voisins étant adjacents et assemblés les uns aux autres par l'intermédiaire d'au moins un assemblage par agent adhésif, **caractérisé en ce que** l'assemblage par agent adhésif est conçu de telle sorte que pour sa part, il soit dissociable par l'exercice d'une force manuelle, pour dissocier les paquets de dents unitaires (1) du paquet de tôles dentées (2) annulaire, **en ce que** d'autre part, il solidarise les paquets de dents unitaires (1) pendant le transport.

2. Paquet de tôles dentées selon la revendication 1, **caractérisé en ce que** sur l'une de leur face frontale (5), les pièces polaires (4) comportent au moins une saillie (6) et sur leur autre face frontale (8), elles comportent au moins un creux (9) et **en ce que** la saillie (6) et le creux (9) sont conçus de préférence sans contre-dépouille.

3. Paquet de tôles dentées selon la revendication 2, **caractérisé en ce que** la saillie (6) et le creux (9) sont conçus pour être complémentaires l'un de l'autre.

4. Paquet de tôles dentées selon la revendication 2 ou 3, **caractérisé en ce que** la largeur de la saillie (6) dans la région de la face frontale (5) de la pièce polaire (4) est inférieure à la largeur de ladite face frontale.

5. Paquet de tôles dentées selon l'une quelconque des revendications 1 à 4, **caractérisé en ce que** l'agent adhésif se trouve dans la région de la fente de jointure (11), entre des paquets de dents unitaires (1) voisins.

6. Paquet de tôles dentées selon l'une quelconque des revendications 1 à 5, **caractérisé en ce que** l'agent adhésif est appliqué sous la forme de points d'agent adhésif.

7. Procédé de fabrication d'un paquet de tôles dentées selon l'une quelconque des revendications 1 à 6, lors duquel par les faces frontales (5, 8) des pièces polaires (4), les paquets dentés unitaires (1) sont assemblés les uns aux autres en étant adjacents, un agent adhésif étant introduit au moins partiellement entre les paquets dentés unitaires (1), **caractérisé en ce qu'**on applique l'agent adhésif dans la région de la fente de jointure (11) sur au moins une face frontale (10, 12) du paquet de tôles dentées (2) et **en ce que** par effet capillaire, l'agent adhésif pénètre dans la fente de jointure (11).

8. Procédé selon la revendication 7, **caractérisé en ce qu'**on applique l'agent adhésif sous forme de gouttes.

9. Procédé selon la revendication 7 ou 8, **caractérisé en ce que** dans un outil de découpe, on ménage d'abord des zones de sectionnement entre des tôles unitaires (la) voisine et dans une étape supplémentaire, on découpe les tôles dentées unitaires (la).

10. Procédé selon la revendication 9, **caractérisé en ce que** les tôles dentées unitaires (la) présentes selon une disposition circulaire forment un plan du paquet de tôles (2) les tôles dentées unitaires (la) placées sous forme circulaire étant empilées pour former le paquet de tôles (2).

11. Procédé selon l'une quelconque des revendications 7 à 10, **caractérisé en ce qu'**on applique l'agent adhésif sur des faces frontales de tôles dentées unitaires (la) à l'intérieur du paquet de tôles (2).
